# EUROPÄISCHE PATENTSCHRIFT

(11) **EP 3 822 578 B1**
(45) Veröffentlichungstag und Bekanntmachung des Hinweises auf die Patenterteilung: **24.07.2024**
(21) Anmeldenummer: 19209464.7
(22) Anmeldetag: 15.11.2019
(51) Int. Cl.: G01B 11/25

(54) **ADAPTIVER 3D-SCANNER MIT VARIABLEM MESSBEREICH**
ADAPTIVE 3D SCANNER WITH VARIABLE MEASURING RANGE
SCANNER 3D ADAPTATIF À PLAGE DE MESURE VARIABLE

(43) Veröffentlichungstag der Anmeldung: 19.05.2021
(73) Patentinhaber: Hexagon Technology Center GmbH, 9435 Heerbrugg (CH)
(72) Erfinder: JENSEN, Thomas, CH-9400 Rorschach (CH); HERMSTEIN, Michael, D-88662 Überlingen (DE); STIGWALL, Johan, CH-9008 St. Gallen (CH); SCHWENDENER, Andreas, CH-7000 Chur (CH); GODDING, Robert, D-38122 Braunschweig (DE); MÜNSTERMANN, Peter, D-78462 Konstanz (DE)
(74) Vertreter: Kaminski Harmann

(56) Entgegenhaltungen:
- DE-A1- 102014 019 671
- DE-A1- 102018 108 874
- DE-B4- 112014 001 459
- US-A1- 2014 071 458
- WINDECKER R ET AL: "THREE-DIMENSIONAL TOPOMETRY WITH STEREO MICROSCOPES", OPTICAL ENGINEERING, SOC. OF PHOTO-OPTICAL INSTRUMENTATION ENGINEERS, BELLINGHAM, vol. 36, no. 12, 1 December 1997 (1997-12-01), pages 3372 - 3377, XP000731396, ISSN: 0091-3286, DOI: 10.1117/1.601576

## Beschreibung

Die Erfindung betrifft einen 3D Scanner zur Vermessung von Objektoberflächen mit spezifischen Zoomfunktionalitäten.

In vielen technischen Anwendungsbereichen besteht das Bedürfnis, Objekte mit hoher Genauigkeit oder bezüglich deren Zusammensetzung zu vermessen. Dieses gilt insbesondere für die fertigende Industrie, für die das Vermessen und Überprüfen von Oberflächen von Werkstücken hohe Bedeutung, insbesondere auch zu Zwecken der Qualitätskontrolle, hat.

Für solche Anwendungen werden beispielsweise Koordinatenmessmaschinen eingesetzt, welche eine präzise Vermessung der Geometrie einer Objektoberfläche, typischerweise mit Mikrometer-Genauigkeit, ermöglichen. Zu vermessende Objekte können beispielsweise Motorblöcke, Getriebe und Werkzeuge sein. Bekannte Koordinatenmessmaschinen vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in der US 5,402,582 oder der EP 1 474 650 beschrieben.

Ein weiteres Beispiel für ein gattungsgemässes System zur Vermessung von Objektoberflächen zum Zweck der Fertigungskontrolle ist ein Triangulationsscanner. Triangulation als Messmethode ermöglicht generell das schnelle und präzise Scannen einer Oberfläche. Derartige Messsysteme sind beispielsweise in den

DE 10 2004 026 090 A1, WO 2011/000435 A1, US 2014/071458 A1, DE 11 2014 001 459 B4, DE 10 2014 019 671 A1, DE 10 2018 108 874 A1 oder bei Windecker R. et al. "Three-dimensional topometry with stereo microscopes", Optical Engineering, Vol. 36 No. 12. December 1997, beschrieben.

Eine spezielle Form des Triangulationsscanners stellt ein auf dem Prinzip der Streifenprojektion beruhendes Messsystem dar. Ein solches Messgerät verfügt typischerweise über einen Projektor und über zwei Kameras, welche ein jeweiliges Erfassen eines mittels des Projektors projizierten Musters unter unterschiedlichen Winkeln ermöglichen. Derartige Systeme sind z.B. aus der EP 3 258 211 A1 oder der US 2014/0078490 A1 bekannt.

Triangulationsscanner bieten den Vorteil einer zerstörungsfreien, da kontaktlosen, Oberflächenvermessung bei gleichzeitig vergleichsweise grosser Messgenauigkeit und schnellem Messfortschritt.

Die koordinative Oberflächenvermessung erlaubt das Feststellen von geometrischen Abweichungen am Werkstück von entsprechenden Sollwerten. Diesbezüglich kann damit eine hochgenaue Angabe zur Fertigungspräzision bzw. Fertigungsqualität gemacht werden. Es kann also festgestellt werden ob Form und Dimensionierung des produzierten Teils innerhalb einer vorgegebenen Toleranz liegen und das Bauteil als Ausschuss oder Gutteil anzusehen ist.

Stereo 3D Scanner verfügen typischerweise über ein definiertes Messvolumen, innerhalb dessen eine Oberflächenvermessung verlässlich möglich ist. In anderen Worten, der Abstand zwischen dem Messgerät und der Oberfläche muss einem bestimmten Messabstand aus einem zulässigen Abstandsbereich entsprechen. Seitlich zum Abstand, ist das Messvolumen durch den lateralen Messbereich begrenzt (Messfeld). Bei derartigen Geräten muss der Messabstand z.B. für unterschiedliche Objekte oder Objekte mit komplexer Oberflächengeometrie jeweils entsprechend eingehalten werden und der laterale Messbereich ist somit gegeben.

Es sind jedoch auch Messgeräte bekannt, die unterschiedliche Messbereiche bereitstellen können. Hierzu müssen die Objektive sowohl der Kameras als auch des Projektors gewechselt werden. Dieser Austausch ist manuell von einem Benutzer durchzuführen. Damit einhergehend muss eine Re-Kalibration der Kameras zueinander erfolgen. Dieser Ablauf führt zu einer Messunterbrechung und damit zu einer nachteiligen Verlängerung der Gesamtmesszeit und ist zudem nur bedingt für einen automatisierten Einsatz geeignet.

Es ist daher Aufgabe der vorliegenden Erfindung, eine Vorrichtung anzugeben, die eine verbesserte Objektprüfung mittels Triangulation bereitstellt.

Insbesondere ist es Aufgabe der Erfindung, eine kompakte Vorrichtung vorzuschlagen, die eine verbesserte Flexibilität bezüglich der Vermessung von Objekten bereitstellt.

Eine weitere Aufgabe der Erfindung ist es, eine Messvorrichtung mit einem, insbesondere bezüglich der Überlappung der Kamerasichtfelder, verbesserten Messbereich bereitzustellen.

Diese Aufgaben werden durch den unabhängigen Anspruch gelöst. Merkmale, die die Erfindung in alternativer oder vorteilhafter Weise weiterbilden, sind den abhängigen Patentansprüchen zu entnehmen.

Ziel der vorliegenden Erfindung ist die Bereitstellung eines adaptiven 3D-Scanners, der flexible Messfeldanpassungen bezüglich Größe und Auflösung bei hoher Integrität erlaubt, insbesondere ohne Neukalibration des Scanners, wobei zudem ein automatisierter, benutzerunabhängiger Einsatz auch in einem Roboterumfeld ermöglicht wird.

Um den kameraseitigen Messbereich in der Objektebene bei konstantem Messabstand anzupassen, ist in der Regel eine Änderung der Brennweite des Objektivs erforderlich. Bisher wurde dies durch Austausch der Optiken (oben erwähnt) erreicht. Alternativ ist jedoch der Einsatz einer Zoom-Optik denkbar, wie sie z.B. auf dem Gebiet der Fotografie bekannt ist.

Zur Bereitstellung eines Zoom-Designs für eine 3-fache Maßstabsänderung ist z.B. eine Anordnung mit zwei beweglichen Linsengruppen erforderlich. Hierzu durchgeführte Toleranzanalysen haben gezeigt, dass die Wiederholbarkeitsanforderungen für die Positionierung der mechanisch bewegten Linsengruppen eine extrem hohe laterale Positioniergenauigkeit bedeuten. Nur so können verlässliche und reproduzierbare Messungen ohne Nachkalibration des Systems sichergestellt werden.

Diese hohen Anforderungen erfordern einen vergleichsweise grossen Aufwand hinsichtlich der Realisierung bei ebenfalls vergleichsweise hohen Kosten, wenn eine wiederkehrende Kalibration nach der Umstellung des Messbereiches vermieden werden soll (z.B. für den Robotereinsatz). Die vollständige Vermeidung von Positionierungsfehlern stellt hierbei eine zentrale Aufgabe dar.

Ein erfindungsgemässer Ansatz zielt auf die Vermeidung einer mechanischen Bewegung von optischen Elementen der Kameras ab.

Moderne CMOS Bildsensoren mit kleinen Pixelgrößen bieten eine vergleichsweise grosse Pixelanzahl (z.B. im Bereich von 50 bis 120 MP mit 2.2 um Pixelpitch). Mit einer entsprechenden Festbrennweitenoptik kann durch digitales Heran- bzw. Herauszoomen bei einer Reduktion des Messbereiches um einen Faktor 3 immer noch eine ausreichend grosse Auflösung (z.B. ca. 13 MP) erreicht werden, was für einen gattungsgemässen 3D-Scanner ausreichend ist.

Bei voller Nutzung des Bildsensors kann zudem ein 2x2 Binning-Mode gewählt werden, der eine Reduktion der übertragbaren Pixel um den Faktor 4, d.h. beispielsweise auf 30 MP, erlaubt. Die Optik muss dann vorteilshafterweise nur über eine grosse Auflösung im Zentralbereich verfügen, was die Korrektion der Abbildungsfehler des Kameraobjektives vereinfacht. Beispielsweise kann ein Objektiv mit 5 Linsen ausreichend sein, um die geforderten Messspezifikationen zu erfüllen. Bei solch einer Lösung kann digitales Zoomen ein optisches Zoomen mit bewegten Elementen ersetzen, so dass eine stabile und reproduzierbare Anpassung des Messfelds gewährleistet werden kann.

Der Einsatz einer solchen Zoomlösung in einem Triangulationsscanner mit einer oder mehreren Kameras ist generell denkbar, jedoch sind bei dieser Lösung die vergleichsweise hohen Kosten nachteilig, die in diesem Fall durch den Einsatz entsprechend notwendiger Bildsensoren bzw. Kameras entstehen.

Erfindungsgemäss wird daher eine Kombination aus optischem und digitalem Zoom vorgeschlagen, bei der Kameras mit einer geringeren, aber ausreichenden Pixelanzahl (z.B. im Bereich ca. 20 MP) Verwendung finden und dabei noch ein geeignetes digitales Zoomen erlauben.

Für das optische Zoomen wird eine separierte Lösung bestehend aus zwei unterschiedlichen Festbrennweitenobjektiven vorgeschlagen.

Die Ausführungsformen weisen vier Kameras auf, wobei die vier Kameras zwei Kamerapaare bilden. Jedes Kamerapaar verfügt über eine spezifische Gesamtbrennweite, wobei diese für die Kamerapaare unterschiedlich sind. Insbesondere können die Kameraobjektive mittels eines Strahlteilers kombiniert werden, so dass je eine Kamera jedes Kamerapaars durch den Strahlteiler kombiniert sind und die kombinierten Objektive aus dem gleichen Triangulationswinkel ein zu vermessendes Objekt betrachten. Die Erfindung betrifft damit ein als Triangulationsscanner ausgebildetes Messgerät zur Vermessung einer Objektoberfläche. Der Triangulationsscanner weist eine Projektionseinheit zur Projektion eines Musters auf die Objektoberfläche und mindestens eine erste Bilderfassungseinheit mit einem ersten Sensor und eine zweite Bilderfassungseinheit mit einem zweiten Sensor auf, wobei die erste und die zweite Bilderfassungseinheit jeweils eine Linsen-Baugruppe mit einer ersten Brennweite aufweisen und jeweils ausgerichtet und ausgebildet sind zur Erfassung eines das Muster abbildenden Bildes und zur Bereitstellung entsprechender Bildinformation.

Zudem ist eine Steuerungs- und Verarbeitungseinheit zum Erhalt der Bildinformation und zur Ableitung von Distanzmesswerten aus der Bildinformation vorgesehen.

Der Scanner verfügt damit über einen Projektor und über ein erstes Kamerapaar, deren Bilddaten von der Steuerungs- und Verarbeitungseinheit erhalten und ausgewertet werden können.

Der Triangulationsscanner weist ferner eine dritte Bilderfassungseinheit mit einem dritten Sensor und eine vierte Bilderfassungseinheit mit einem vierten Sensor auf, wobei die dritte und die vierte Bilderfassungseinheit jeweils eine Linsen-Baugruppe mit einer zweiten Brennweite aufweisen und jeweils ausgerichtet und ausgebildet sind zur Erfassung eines das Muster abbildenden Bildes und zur Bereitstellung entsprechender Bildinformation.

Die erste Brennweite ist kleiner als die zweite Brennweite. Die Brennweiten der ersten und der zweiten Kamera (Bilderfassungseinheit) sind damit kleiner als die Brennweiten der dritten und der vierten Kamera.

Die erste und die zweite Bilderfassungseinheit bilden ein erstes (Kamera-) Stereopaar und die dritte und die vierte Bilderfassungseinheit ein zweites Stereopaar.

Der Triangulationsscanner weist zudem eine Erfassungszoomfunktionalität zum derartigen Ansteuern und/oder Auslesen der Bildsensoren auf, sodass für jeden Sensor ein jeweils erster Erfassungszustand und ein jeweils zweiter Erfassungszustand bereitstellbar ist, wobei im ersten Erfassungszustand ein grösserer Bilderfassungsbereich des jeweiligen Sensors definiert ist als im zweiten Erfassungszustand. Für jeden Sensor kann damit die zur Bereitstellung jeweiliger Bildinformation auszulesende Sensorfläche (gesteuert) variiert werden.

Der erste und der zweite Erfassungszustand des ersten Sensors korrespondiert mit dem ersten und dem zweiten Erfassungszustand des zweiten Sensors, wodurch durch das erste Stereopaar eine erste und eine zweite Erfassungszoomstufe bereitstellbar ist.

Der erste und der zweite Erfassungszustand des dritten Sensors korrespondiert mit dem ersten und dem zweiten Erfassungszustand des vierten Sensors, wodurch durch das zweite Stereopaar eine dritte und eine vierte Erfassungszoomstufe bereitstellbar ist.

Jede Erfassungszoomstufe stellt die Erfassung eines Bildes entsprechend einem durch die jeweilige Erfassungszoomstufe definierten Sichtfeldes (am Objekt) bereit, wobei die Sichtfelder jeweils unterschiedlich sind. Insbesondere unterscheiden sich die Sichtfelder hinsichtlich Grösse und/oder Lage auf dem Objekt bei insbesondere gleichen Messabständen bzw. gleichbleibendem Messbereich.

Alternativ ist der Messbereich, d.h. ein zulässiger Abstandsbereich zur Durchführung von Messungen, für das zweite Kamerapaar mit einer grösseren Brennweite insbesondere kleiner als jener für das erste Kamerapaar. Die Messabstände, d.h. die Abstände der Kamerapaare zu einem Objekt, insbesondere entlang der optischen Achsen, können gleich sein. Alternativ kann das zweite Paar einen geringeren Messabstand aufweisen, wodurch ein Triangulationswinkel und somit die Präzision vergrössert ist.

In einer Ausführungsform weist der Triangulationsscanner eine derart konfigurierte Erfassungsumschaltfunktionalität auf, dass bei Ausführung der Erfassungsumschaltfunktionalität durch eine manuelle oder automatische, gezielte Selektion eine bestimmte Erfassungszoomstufe eingestellt wird.

Insbesondere ist bei der Selektion der ersten Erfassungszoomstufe die Bilderfassung mittels des ersten Stereopaars im ersten Erfassungszustand bereitgestellt. Bei Selektion der zweiten Erfassungszoomstufe ist die Bilderfassung mittels des ersten Stereopaars im zweiten Erfassungszustand, bei Selektion der dritten Erfassungszoomstufe ist die Bilderfassung mittels des zweiten Stereopaars im ersten Erfassungszustand und bei Selektion der vierten Erfassungszoomstufe ist die Bilderfassung mittels des zweiten Stereopaars im zweiten Erfassungszustand bereitgestellt.

Durch eine derartige Abstimmung und Zuordnung der digitalen Zoomstufen (Erfassungszoomstufen) und der optischen Zoomstufen (Brennweiten) kann eine Kameraanordnung mit vier definierten Zoomstufen für die Objektvermessung bereitgestellt werden.

In einer Ausführung kann das der zweiten Erfassungszoomstufe zugeordnete Sichtfeld kleiner als das der ersten Erfassungszoomstufe zugeordnete Sichtfeld sein. Zudem ist das der dritten Erfassungszoomstufe zugeordnete Sichtfeld kleiner als das der zweiten Erfassungszoomstufe zugeordnete Sichtfeld und das der vierten Erfassungszoomstufe zugeordnete Sichtfeld ist kleiner als das der dritten Erfassungszoomstufe zugeordnete Sichtfeld.

Die Abstimmung ist hierbei so eingestellt, dass von der ersten bis hin zur vierten Erfassungszoomstufe eine zunehmende Reduktion des Sichtfeldes (am Objekt) gegeben ist.

In einer Ausführungsform kann die Erfassungszoomfunktionalität derart eingerichtet sein, dass für den ersten, den zweiten, den dritten und den vierten Sensor jeweils der gleiche erste Erfassungszustand und jeweils der gleiche zweite Erfassungszustand bereitstellbar ist. In anderen Worten, erfolgt bei einer Umschaltung vom ersten Erfassungszustand in den zweiten Erfassungszustand jeweils eine gleich (prozentuale) Reduzierung des verwendeten Bilderfassungsbereichs auf dem Sensor.

In einer Ausführung kann die optische Achse der ersten Bilderfassungseinheit parallel oder koaxial zur optischen Achse der dritten Bilderfassungseinheit ausgerichtet sein. Entsprechend kann alternativ oder zusätzlich die optische Achse der zweiten Bilderfassungseinheit parallel oder koaxial zur optischen Achse der vierten Bilderfassungseinheit ausgerichtet sein.

Insbesondere weist der Triangulationsscanner einen Strahlteiler auf und die erste und die dritte bzw. die zweite und die vierte Bilderfassungseinheit sind derart relativ zu dem Strahlteiler ausgerichtet, dass die jeweiligen entsprechenden optischen Achsen parallel oder koaxial ausgerichtet sind.

Gemäss einer Ausführungsform kann die Projektionseinheit eine insbesondere entlang deren optischer Achse variabel positionierbare Zoom-Baugruppe zur Bereitstellung zumindest zweier optischer Projektionsbrennweiten aufweisen. Ferner kann die Projektionseinheit ein eine Projektionsfläche definierendes Projektionselement zur variablen und gesteuerten Lichtemission aufweisen. Der Triangulationsscanner kann zudem eine Projektionszoomfunktionalität zum derartigen Ansteuern des Projektionselements aufweisen, dass bei Ausführung der Projektionszoomfunktionalität ein erster und ein zweiter Projektionszustand bereitstellbar ist, wobei im ersten Projektionszustand ein grösseres Projektionssichtfeld als im zweiten Projektionszustand bereitgestellt wird.

Hierzu wird beispielsweise die aktiv und selektiv steuerbare Projektionsfläche eines DLPs bzw. DMDs (Digital Mirror Device) entsprechend angesteuert. Zur Bereitstellung des ersten Projektionszustands kann entsprechende eine grössere Fläche des DLPs bzw. DMDs zur Musterprojektion aktiviert sein als für den zweiten Projektionszustand.

Insbesondere kann zur Bereitstellung des zweiten Projektionszustands gesteuert durch die Projektionszoomfunktionalität ein kleinerer Lichtemissionsbereich der Projektionsfläche, insbesondere ein innerer Teilbereich, für die Mustererzeugung aktiviert sein als zur Bereitstellung des ersten Projektionszustands.

In einem derartigen Betrieb des Projektors werden entsprechend die Pixel eines inneren Flächenbereichs aktiviert, wobei die Beleuchtungspixel in einem Randbereich um den inneren Bereich herum dunkel (inaktiv) bleiben.

Mit einer Projektorkonfiguration mit mechanisch verstellbarem Zoomelement zusammen mit einem digitalen Projektionselement wie beschrieben kann für jede optische Projektionsbrennweite (optischer Projektorzoom) der erste und der zweite Projektionszustand (digitaler Projektorzoom) bereitgestellt werden. Durch eine angepasste Kombination dieser Zoomvarianten kann ein mehrstufiger Projektorzoom implementiert werden.

In einer Ausführungsform kann eine erste der Projektionsbrennweiten grösser als eine zweite der Projektionsbrennweiten sein.

Durch ein Einstellen der ersten Projektionsbrennweite (optischer Zoomzustand) und des ersten Projektionszustands (digitaler Zoomzustand) kann eine erste Projektionszoomstufe bereitgestellt werden. Durch das Einstellen der ersten Projektionsbrennweite und des zweiten Projektionszustands kann eine zweite, durch Einstellen der zweiten Projektionsbrennweite und des ersten Projektionszustands kann eine dritte und durch Einstellen der zweiten Projektionsbrennweite und des zweiten Projektionszustands kann eine vierte Projektionszoomstufe bereitgestellt werden.

In einer Ausführung kann der Triangulationsscanner eine derart konfigurierte Projektorumschaltfunktionalität aufweisen, dass bei Ausführung der Projektorumschaltfunktionalität durch eine Selektion eine der Projektionszoomstufen bereitgestellt wird. Die Selektion bzw. die Ausführung der Projektorumschaltfunktionalität kann manuell oder automatisch, z.B. gesteuert durch eine übergeordnete Steuerung, erfolgen. Die Selektion kann z.B. durch eine Benutzereingabe oder durch ein Steuerungssignal erfolgen.

In einer Ausführung kann der Triangulationsscanner eine derart konfigurierte Messsteuerungsfunktionalität haben, dass bei deren Ausführung eine Selektion der Projektorumschaltfunktionalität und eine Selektion der Erfassungsumschaltfunktionalität, z.B. aufgrund einer Benutzereingabe oder eines Steuerungsbefehls, derart abgestimmt erfolgen können, dass
- die erste Erfassungszoomstufe und die erste Projektionszoomstufe als erste Messeinstellung,
- die zweite Erfassungszoomstufe und die zweite Projektionszoomstufe als zweite Messeinstellung,
- die dritte Erfassungszoomstufe und die dritte Projektionszoomstufe als dritte Messeinstellung und
- die vierte Erfassungszoomstufe und die vierte Projektionszoomstufe als vierte Messeinstellung bereitstellbar sind, wobei das Bereitstellen der jeweiligen Erfassungszoomstufe und der jeweiligen Projektionszoomstufe einer Messeinstellung zeitlich abgestimmt, insbesondere zeitlich überlappend, insbesondere simultan, erfolgt.

Die Messsteuerungsfunktionalität bzw. deren Selektionen kann bzw. können z.B. manuell oder automatisch, z.B. gesteuert durch eine übergeordnete Steuerung, erfolgen, beispielsweise durch eine Benutzereingabe oder durch ein Steuerungssignal.

Die Messsteuerungsfunktionalität in Verbindung mit der spezifischen Kamera- und Projektorausgestaltung stellt somit ein Messgerät bereit, welches jeweils abgestimmt auf eine gewählte Vergrösserung sowohl eine angepasste Projektion, d.h. insbesondere eine Grösse und/oder Auflösung der Musterprojektion, als auch eine angepasste Bilderfassung verfügbar macht. In anderen Worten können ein aktuelles Sichtfeld des Projektors, d.h. eine beleuchtete Fläche am Objekt, und die aktuellen Sichtfelder der Kameras bezüglich Grösse und Überlapp jeweils angepasst und aufeinander abgestimmt bereitgestellt werden.

Ein Beispiel, welches nicht vom Schutzbereich der Ansprüche abgedeckt ist, betrifft auch einen Triangulationsscanner zur Vermessung einer Objektoberfläche, mit einer Projektionseinheit zur Projektion eines Musters auf die Objektoberfläche und mit einer ersten Bilderfassungseinheit mit einem ersten Sensor und einer ersten Linsen-Baugruppe. Die erste Bilderfassungseinheit ist ausgerichtet und ausgebildet zur Erfassung eines das Muster abbildenden Bildes und zur Bereitstellung entsprechender Bildinformation. Der Scanner umfasst zudem eine Steuerungs- und Verarbeitungseinheit zum Erhalt der Bildinformation und zur Ableitung von Distanzmesswerten aus der Bildinformation.

Die erste Linsen-Baugruppe weist mindestens eine entlang deren optischer Achse variabel und hochpräzise positionierbare erste Zoom-Linsengruppe zur Bereitstellung zumindest zweier optischer Erfassungsbrennweiten auf, wodurch zumindest eine erste und eine zweite Erfassungszoomstufe bereitstellbar ist.

Jede Erfassungszoomstufe stellt die Erfassung eines Bildes entsprechend einem durch die jeweilige Erfassungszoomstufe definierten Sichtfeld bereit, wobei die Sichtfelder jeweils unterschiedlich sind.

In einem weiteren Beispiel weist der Triangulationsscanner eine zweite Bilderfassungseinheit mit einem zweiten Sensor und einer zweiten Linsen-Baugruppe auf. Die erste und die zweite Bilderfassungseinheit bilden ein erstes Stereopaar. Die erste und die zweite Linsen-Baugruppe weisen jeweils mindestens eine entlang deren optischer Achse variabel und hochpräzise positionierbare erste Zoom-Linsengruppe zur Bereitstellung zumindest zweier optischer Erfassungsbrennweiten auf, wodurch für das erste Stereopaar eine erste und eine zweite Erfassungszoomstufe bereitgestellt ist. Jede Erfassungszoomstufe stellt die Erfassung eines Bildes entsprechend einem durch die jeweilige Erfassungszoomstufe definierten Sichtfeld bereit und die Sichtfelder sind jeweils unterschiedlich.

Im Unterschied zur vorangehenden Ausführungsform des Triangulationsscanners werden hierbei nicht vier Kameras zur Bereitstellung zweier Stereopaare vorgesehen, sondern das erste Stereopaar stellt durch die mechanische, optische Zoomanordnung zudem ein quasi zweites Stereopaar bereit.

In einem Beispiel weist die erste und die zweite Linsen-Baugruppe jeweils eine weitere, entlang deren optischer Achse variabel und hochpräzise positionierbare zweite Zoom-Linsengruppe, zur Bereitstellung insgesamt zumindest dreier optischer Erfassungsbrennweiten auf, wodurch für das Kamerapaar (Stereopaar) zumindest eine dritte Erfassungszoomstufe bereitgestellt ist.

Durch eine solche Variante ist ein mehrstufiger Zoom mittels mehrerer rein mechanisch verstellbarer und positionierbarer optischer Linsengruppen realisierbar.

In einer Ausführungsform eines oben beschriebenen Triangulationsscanners mit einer Projektionseinheit zur Projektion eines Musters auf die Objektoberfläche, mit mindestens einer ersten Bilderfassungseinheit mit einem ersten Sensor und einer ersten Linsen-Baugruppe und mit mindestens einer zweiten Bilderfassungseinheit mit einem zweiten Sensor und einer zweiten Linsen-Baugruppe kann die erste und/oder die zweite Bilderfassungseinheit derart ausgebildet sein, dass ihr Sensor und ihre Linsen-Baugruppe so positioniert sind, dass ein Sensormittelpunkt des Sensors relativ zur optischen Achse der Linsen-Baugruppe versetzt ist, sodass ein Abstand a > 0 von dem Sensormittelpunkt zu der optischen Achse vorliegt.

Insbesondere können die optischen Achsen der ersten und der zweiten Linsen-Baugruppe bzw. der ersten und der zweiten Bilderfassungseinheit parallel ausgerichtete sein. Hierdurch wird ein rein lateraler Versatz des erfassbaren Objektbereichs erreicht. In anderen Worten: der erfassbare Bereich wird in der Objektebene lateral verschoben.

Gemäss einer Ausführungsform kann eine exzentrische Verschiebung des Objektbereichs (Sichtfeldes) relativ zur optischen Achse resultieren und der Versatz (des Sensors) derart eingestellt sein, dass durch die Sichtfelder der ersten und der zweiten Bilderfassungseinheit definierte Objektbereiche in einer Objektebene im Wesentlichen übereinstimmen, insbesondere vollständig überlappen.

In einer Ausführungsform kann hierdurch ein gleichförmiges Pixelraster in der Objektebene für die erste und die zweite Bilderfassungseinheit bereitgestellt werden.

Insbesondere kann eine Orientierung der der ersten Bilderfassungseinheit zugeordneten Pixel in der Objektebene und eine Orientierung der der zweiten Bilderfassungseinheit zugeordneten Pixel in der Objektebene gleich sein.

Gemäss einer Ausführungsform können die erste Bilderfassungseinheit und die zweite Bilderfassungseinheit in einem gemeinsamen äusseren Koordinatensystem referenziert sein, wobei die Referenzierung (nur) durch eine translatorische Transformation bereitgestellt ist. Hierdurch kann ein gleichförmiges gemeinsames Voxelraster für die erste und die zweite Bilderfassungseinheit bereitgestellt sein.

Die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: schematisch eine Ausführungsform eines erfindungsgemässen Messgeräts;
- Fig. 2: eine weitere Ausführungsform eines erfindungsgemässen Messgeräts;
- Fig. 3a-b: schematisch eine Ausführungsform einer Projektionseinheit eines erfindungsgemässen Prüfsystems; und
- Fig. 4: eine weitere Ausführungsform eines erfindungsgemässen Messgeräts.

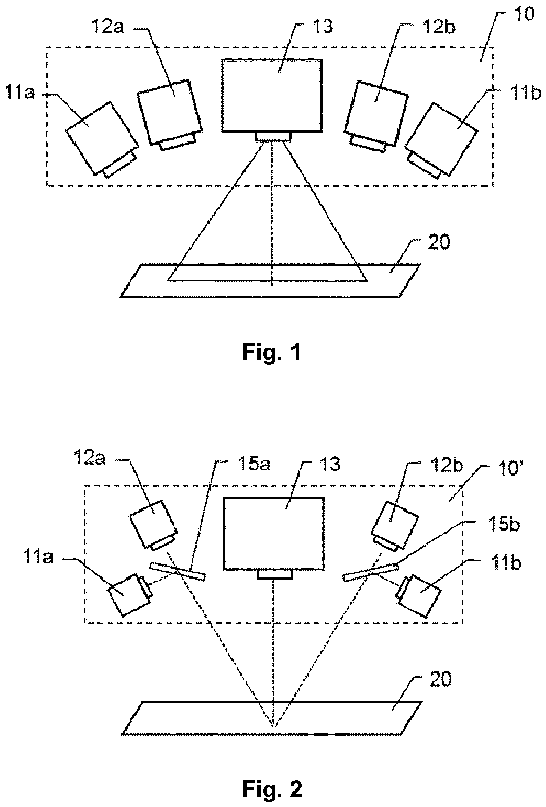

Figur 1 zeigt eine Ausführungsform eines erfindungsgemässen Messgeräts 10 zur Vermessung eines Objekts 20. Das Messgerät 10 weist eine Projektionseinheit 13 und vier Bilderfassungseinheiten 11a,11b,12a,12b auf. Die Projektionseinheit 13 und die Bilderfassungseinheiten 11a,11b,12a,12b sind jeweils in bekannter Position und Orientierung relativ zueinander angeordnet.

Die Projektionseinheit 13 definiert eine optische Achse und ein Sichtfeld (field of view), innerhalb dessen eine Lichtprojektion auf das zu vermessende Objekt 20 gerichtet werden kann. Damit ist eine definierte Projektion auf dem Objekt 20 erzeugbar.

Der Projektor 13 kann zentral zwischen den Kameras 11a,11b,12a,12b oder alternativ (nicht gezeigt) seitlich versetzt angeordnet sein. Der Projektor 13 kann zudem vorzugsweise in einem möglichst kleinen Winkel relativ zu dem Objekt 20 ausgerichtet werden

Die Kameras 11a,11b,12a,12b sind derart ausgerichtet, dass jede der Kameras die durch den Projektor 13 bereitstellbare Lichtprojektion in einem bestimmten Messbereich genau erfassen und auflösen kann. Als Messbereich wird hier Bezug genommen auf einen Abstandsbereich zwischen dem Messgerät 10 und dem Objekt 20. Der Abstandsbereich ergibt sich typischerweise aus einem Tiefenbereich um die Objektebene 20.

Die vier Kameras 11a,11b,12a,12b bilden zwei Stereopaare. Die Kameras 11a und 11b bilden ein erstes, die Kameras 12a und 12b bilden ein zweites Stereopaar. Jedes Stereopaar ermöglicht das Erfassen der Lichtprojektion gleichzeitig mit zwei Kameras. In einer alternativen Anordnung (nicht gezeigt) können die Kameras eines Kamerapaars nicht symmetrisch um den Projektor positioniert sein, sondern beide z.B. auf einer Seite angeordnet sein.

Die Kameras 11a und 11b weisen jeweils ein erstes Objektiv mit einer ersten festen Brennweite auf, d.h. die Kameras 11a und 11b verfügen über die gleiche Brennweite und sind damit zur stereoskopischen Bilderfassung für einen durch die Brennweite definierten Messbereich ausgelegt.

Insbesondere ist ein Objektiv mit Festbrennweite vorgesehen, das ein maximales FOV (Field Of View, Sichtfeld) von 100% in Kombination mit einem 20 MP (Mega Pixel) Bildsensor bereitstellt. Das Sichtfeld bezieht sich auf den Bereich, der am Objekt erfassbar ist. Da für das Messsystem 10 für gängige Messaufgaben typischerweise nicht die volle Auflösung von 20 MP erforderlich ist, wird insbesondere eine Datenreduktion (durch Binning auf dem Sensor oder in der Software / im Kameratreiber) ausgeführt, z.B. auf 65% der vollen Auflösung, d.h. z.B. auf 13 MP. Diese Bilderfassung bei Nutzung eines Kamerasichtfelds (Bilderfassungsbereich) von 100% mit dem ersten Stereopaar bildet eine erste (Erfassungs-) Zoomstufe des Geräts 10.

Für eine zweite (Erfassungs-) Zoomstufe erlaubt der Sensor aufgrund seiner relativ großen Pixelanzahl ein digitales Zoomen innerhalb des maximalen Bilderfassungsbereichs. Hierzu kann z.B. in den Zentralbereich gezoomt werden, wobei eine Reduktion des Sichtfeldes beispielsweise auf ca. 66% mit einer entsprechenden Bildausgabe (z.B. von 9 MP) bereitgestellt wird. Das Zoomen kann mittels gezielter Selektion eines Erfassungsbereichs erfolgen (ROI, region-of-interest). Die Selektion kann an dem Sensor selbst oder mittels der Software/Kameratreiber erfolgen.

Die Kameras 12a und 12b weisen jeweils ein zweites Objektiv mit einer zweiten festen Brennweite auf, d.h. die Kameras 12a und 12b verfügen über die gleiche Brennweite und sind damit ebenfalls zur stereoskopischen Bilderfassung für einen anderen, durch die unterschiedliche Brennweite definierten Messbereich ausgelegt.

Eine dritte Zoomstufe kann damit durch eine weitere Reduktion des Sichtfeldes durch Umschalten auf das zweite Stereopaar erzielt werden. Die Brennweiten der zweiten Objektive sind größerer als die Brennweiten der ersten Objektive. Das am Objekt erfassbare Sichtfeld wird hierdurch z.B. auf ca. 44% reduziert. Für die Erfassung des reduzierten Sichtfeldes wird in der dritten (Erfassungs-) Zoomstufe vorzugsweise der maximale Bilderfassungsbereich der Sensoren der Kameras 12a und 12b verwendet. Auch hier kann aufgrund der grossen Anzahl verfügbarer Sensorpixel eine Datenreduktion erfolgen (z.B. auf ca. 13 MP).

Eine vierte (Erfassung-) Zoomstufe kann wiederum durch ein digitales Zoomen mittels des zweiten Stereopaars bereitgestellt werden. Dies entspricht der stärksten Vergrößerung für diese Ausführungsform. Für die Kameras des zweiten Stereopaars kann hier entsprechend ein kleinerer Bilderfassungsbereich gewählt werden, wodurch eine Reduktion des Sichtfeldes am Objekt 20 bereitgestellt ist. Die Reduktion kann z.B. auf 30% zur ersten Zoomstufe erfolgen. Nach dem Prinzip der zweiten Zoomstufe kann z.B. in den Zentralbereich gezoomt werden, wobei eine Reduktion des Bilderfassungsbereichs am Sensor beispielsweise auf ca. 66% mit einer entsprechenden Bildausgabe (z.B. von 9 MP) bereitgestellt wird. Das Zoomen kann mittels gezielter Selektion eines Erfassungsbereichs erfolgen (ROI, region-of-interest). Die Selektion kann an dem Sensor selbst oder mittels der Software/Kameratreiber erfolgen.

Damit ist ein vierstufiger (Erfassungs-) Zoombetrieb des Messgeräts 10, der einen 3-fachen Zoombereich abdeckt, zu vertretbaren Kosten erreichbar. Da zudem keine beweglichen Komponenten vorgesehen sind, kann eine sehr grosse Reproduzierbarkeit und damit Robustheit und Verlässlichkeit der Zoomstufen gewährleistet werden. Eine Neukalibration zwischen dem Umschalten der Zoomstufen ist hier nicht erforderlich.

Das Umschalten zwischen den Zoomstufen kann zudem quasi instantan erfolgen, wodurch ein schnellerer Messablauf bereitgestellt werden kann.

Ein weiterer signifikanter Vorteil diese Systems 10 ist die Möglichkeit einer zusätzlichen Verifikation der Messaufnahmen durch gleichzeitige Datenerfassung und Auswertung mit dem zweiten Kamerapaar, während mit dem ersten Kamerapaar ein Scan durchgeführt wird. Das vom Projektor projizierte Muster kann mit dem ersten und simultan mit dem zweiten Kamerapaar aufgenommen werden.

Die Festbrennweitenobjektive haben im Vergleich zu Zoomobjektiven keine bewegten Teile. Dies erlaubt die sehr grosse Reproduzierbarkeit in Hinblick auf die Bereitstellung der Zoomstufen.

Durch die Verwendung von zwei Festbrennweiten kann der Einsatz eines optischen Zweistufenzooms vermieden werden, wodurch das Risiko einer mangelhaften Reproduzierbarkeit deutlich reduziert bzw. vermieden wird.

Es versteht sich jedoch, dass die Erfindung nicht auf die Bereitstellung von vier Erfassungszoomstufen beschränkt ist, sondern vielmehr auch die Bereitstellung einer grösseren Anzahl von Zoomstufen umfasst. Dies kann z.B. durch die Verwendung von Bildsensoren mit vergleichsweise kleinen Pixelgrössen und einer vergleichsweise grossen Pixelanzahl (z.B. im Bereich von 50 MP bis 120 MP) erreicht werden. Ein digitales Zoomen kann hierdurch in mehr als zwei Schritten bei immer noch ausreichend grosser und präziser Auflösung erfolgen.

Die Projektionseinheit 13 des Triangulationsscanners 10 kann vorzugsweise derart ausgestaltet sein, dass ein sinusförmiges (bezüglich der Intensitätsverteilung) Streifenmuster mit einem Streifenabstand von 0.4 mm mit hohem Kontrast projizierbar ist. Dies ermöglicht eine Signalerfassung mit geringem Rauschen. Die Apertur des Projektors 13 kann dabei möglichst gross gewählt sein, um nur einen kleinen Speckle-Kontrast auf rauen Oberflächen (Rₐ < 0.1 um) zuzulassen.

Wie gezeigt werden zwei echte Kamera-Paare (zwei Stereopaare mit Projektor) als Messinstrument in Kombination mit strukturierter Beleuchtung durch den Projektor vorgeschlagen. Dabei wirkt sich eine thermische Belastung des Projektors nicht auf die Messgenauigkeit aus, da ein projiziertes Muster stets mit zwei Kameras erfassbar ist.

Für eine Messung kann mittels des Projektors 13 ein Phasenshiftverfahren durch die Projektion eines binären Musters (GreyCode - Verfahren) verwendet werden ("Phasenschieben"). Der Phasenshift gibt eine kurzwellige Information, der GreyCode die langwellige Information.

Zur Kontrastvergrösserung können zur langwelligen Indizierung des Raumes mehrere Frequenzen im Phasenshift projiziert werden. Aus der Schwebung der Sinuswellen verschiedener Frequenz kann dann diese als langwellige Information verwendet werden. Hierdurch kann die Projektion scharfer Kanten vermieden werden.

So können alle projizierten Bilder ähnliche Eigenschaften aufweisen. Es werden keine langwelligen Bilder projiziert, die bei konkaven Objektoberfläche andere diffuse Innenreflektionen hervorrufen, als die kurzwelligen Phasenbilder.

Neben einer strukturierten Beleuchtung (mit Phasenschieben) kann das Messverfahren auch mit einer photogrammetrischen Aufnahme und Auswertung betrieben oder ergänzt werden. Der Projektor dient in diesem Fall (nur) zur gleichmäßigen Beleuchtung. Anhand von identifizierbaren Merkmalen im Objektraum können mit einer Bündelausgleichsrechnung oder mittels Stereo-Matching für die Stereo-Kameraanordnung eine dreidimensionale Lage dieser Merkmale und damit Koordinaten bestimmt werden.

Auch ist die Projektion eines Musters mit Zufallsintensitätsverteilung als künstliche Textur eine Variante für eine Messung. Die erreichbare laterale Auflösung kann dabei zwar niedriger sein, jedoch kann mit einer einzigen synchronisierten Aufnahme der beiden Stereo-Kameras eine 3D-Punktwolke generiert werden.

Die Projektionseinheit 13 ist zur Emission eines spezifischen Musters oder einer Musterabfolge in Richtung eines zu vermessenden Objekts 20 ausgebildet. Erfindungsgemäss verfügt die Projektionseinheit 13 über eine entlang deren optischer Achse variabel positionierbare Zoom-Baugruppe zur Bereitstellung zumindest zweier optischer Projektionsbrennweiten. Die Bereitstellung dieser unterschiedlichen Brennweiten in Kombination mit einem Selektiven und bezüglich der Auflösung anpassbaren Projektionselement (lichtemittierende Projektionsfläche) ermöglicht auf Seiten des Projektors 13 eine Einstellung von zumindest vier unterschiedlichen Sichtfeldern am Objekt 20. Diese Projektorsichtfelder können vorzugsweise an die Erfassungssichtfelder angepasst sein, d.h. zumindest die Grössen der Sichtfelder können einander angepasst sein.

Eine mögliche Verschiebung des projizierten Musters auf dem Objekt 20 ist von zwei Kameras gleichzeitig erfassbar und damit in der 3D-Berechnung der Punktwolke vernachlässigbar. Eine Verschiebung des Musters kommt einer allgemeinen Änderung der Startphase des projizierten Sinusmusters über das gesamte Objektfeld gleich (Phasenoffset). Daher ist die Anforderung an den Projektor 13 bezüglich Reproduzierbarkeit geringer als für die Kameras.

Andererseits ist ein Projektor 13 (z.B. auf DLP basierend) im Vergleich zu einer der Kameras 11a-12b relativ teuer. Daher wird im Rahmen der vorliegenden Erfindung die Verwendung eines optischen Zweistufen-Zooms vorgeschlagen, wobei nur ein Projektormodul benötigt wird.

Die Figur 2 zeigt eine weitere Ausführungsform des Messgeräts 10' gemäss der Erfindung. Im Unterschied zur Ausführung gemäss Figur 1 sind hierbei zwei Strahlteiler 15a,15b vorgesehen, welche zusammen mit den Kameras 11a-12b derart angeordnet sind, dass jeweils zwei optische Kameraachsen durch je einen Strahlteiler kombiniert werden.

Die optischen Achsen der ersten 11a und der dritten 12a Kamera werden durch den Strahlteiler 15a so kombiniert, dass diese in Ausbreitungsrichtung nach dem Strahlteiler 15a koaxial vorliegen. Analoges gilt für die Anordnung der Kameras 11b und 11b mit Strahlteiler 15b. Damit sind die erste und die dritte bzw. die zweite und die vierte Bilderfassungseinheit derart relativ zu dem Strahlteiler ausgerichtet, dass die jeweiligen entsprechenden optischen Achsen koaxial ausgerichtet sind.

Die Objektive der kombinierten Kameras betrachten das Objekt 20 damit aus dem gleichen Triangulationswinkel. Zudem kann durch eine solche Anordnung ein geringerer Platzbedarf und damit eine kompaktere Bauweise resultieren.

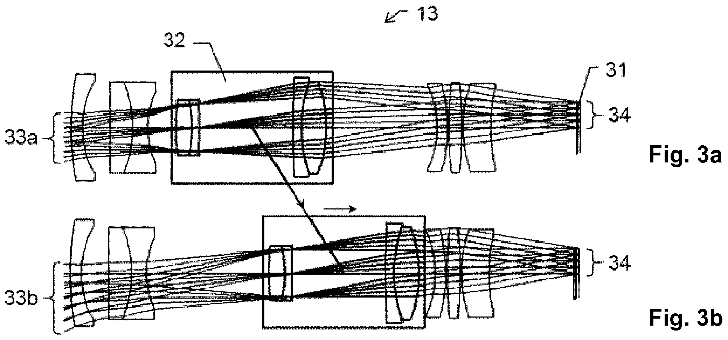

Beispielhaft ist mit den Figuren 3a und 3b eine Ausführungsform der Projektionseinheit 13 mit einer variabel positionierbaren Zoom-Baugruppe 32 in zwei unterschiedlichen Zuständen gezeigt.

Die Projektionseinheit 13 weist ein Projektionselement 31 zur variablen und steuerbaren Lichtemission auf. Das Projektionselement 31 verfügt über eine Projektionsfläche mit einer definierten Anzahl Pixeln, wobei jedes Pixel Licht emittieren kann. Beispielhaft ist eine Emission in einem oberen Flächenteil 34 dargestellt.

Figur 3a zeigt die Projektionseinheit 13 und deren Zoom-Baugruppe 32 mit einer ersten Projektionszoomstufe. Durch die gezeigte Positionierung der Zoom-Baugruppe 32 wird eine erste Brennweite des optischen Systems bereitgestellt, wodurch eine Projektion des mit dem Projektionselement 31 emittierbaren Musters gemäss einem Sichtfeld 33a erzeugt werden kann.

In Figur 3b ist eine andere Positionierung des Baugruppe 32 gezeigt. Hierdurch wird eine kleinere Brennweite für das optische System bereitgestellt und damit ein grösseres Sichtfeld 33b beleuchtet. Die Projektion wird entsprechend grösser abgebildet. Insbesondere wird die Projektion damit für einen grösseren Messbereich (grösserer Abstand zwischen Projektor 13 und Objekt 20) auf dem Objekt 20 scharf abgebildet.

Die beiden gezeigten Projektionszoomstufen können erfindungsgemäss mit jeweils mindestens zwei digitalen Projektionszooms kombiniert werden. Hierzu kann das Projektionselements 31 derart angesteuert werden, dass ein erster und ein zweiter Projektionszustand bereitstellbar ist, wobei im ersten Projektionszustand ein grösserer Projektionsbereich auf dem Projektionselement 31 als im zweiten Projektionszustand bereitgestellt wird.

Eine kleinste Projektionszoomstufe ermöglicht die Bereitstellung eines angenommenen maximalen Projektionssichtfeldes von 100%. Hierzu ist z.B. eine erste Projektionsbrennweite gemäss Figur 3b und ein erster Projektionszustand (voller Projektionsbereich des Projektionselements 31) eingestellt. Insbesondere erfolgt hierzu eine Full-HD Projektion.

Für eine zweite Projektionszoomstufe werden beispielsweise zur Reduktion des Projektionssichtfeldes auf 66% in dem Zentralbereich des Projektionselements 31 nur 1280x720 Elemente zur Projektion genutzt (ROI, region-of-interest, Selektion auf dem DLP). Eine Randzone der Projektionsfläche des Projektionselements 31 kann hierzu schwarz bleiben, d.h. keine Lichtemission bereitstellen.

Eine dritte Projektionszoomstufe kann durch ein Versetzen der Zoom-Baugruppe 32 in die Position gemäss Figur 3a (grössere Brennweite) und das Einstellen des ersten Projektionszustands (volle Nutzung des Projektionsbereichs des Projektionselements 31) bereitgestellt werden. Hierdurch kann wiederum eine Reduktion des Projektorsichtfeldes z.B. auf 44% des maximalen Sichtfeldes erreicht werden.

Eine vierte Projektionszoomstufe kann durch die Kombination der grösseren Brennweite und des zweiten Projektionszustands (teilweiser Nutzung des Projektionsbereichs des Projektionselements 31) bereitgestellt werden.

Durch eine Abstimmung der Steuerung des Messgeräts 10, d.h. eine Abstimmung der Projektionseinstellungen und der Kameraeinstellungen, können die unterschiedlichen Erfassungszoomstufen und die unterschiedlichen Projektionszoomstufen einander passend zugeordnet und kontrolliert abgestimmt entsprechend dieser Zuordnung bereitgestellt werden. Im Resultat bedeutet dies, dass das eingestellte erfassbare Kamerasichtfeld in Form und Grösse jeweils im Wesentlichen dem eingestellten Projektionssichtfeld entspricht (insbesondere unter Vernachlässigung allfällig auftretender optisch bedingter und/oder geometriebedingter Verzerrungen durch z.B. eine verkippte, relative Ausrichtung der Kameras und/oder des Projektors) .

Jede Kamera eines oder beider der Kamerapaare 11a,11b und 12a,12b kann relativ zum Projektor 13 in einer Scheimpflug-Anordnung (die Scheimpflugbedingung erfüllend) zur Messebene stehen. Insbesondere stehen die Bildsensoren der Kameras und/oder eine Projektionsmaske im Projektor 13 in einer Scheimpflug-Anordnung zur Messebene (verkippt). Die Bildsensoren sind relativ zur optischen Achse gekippt angeordnet. Damit kann eine gleichmässig scharfe Projektion der Maske als auch deren Abbildung von der Prüfebene auf die Bildsensoren generiert werden. Insbesondere für das Projektionsobjektiv kann dadurch eine Öffnung einer Blende (kleine F-Zahl) mit einer großen Lichtausbeute und numerischen Apertur (NA) ermöglicht werden. Das Kameraobjektiv kann eine kleinere Blende aufweisen. Die Scheimpflug-Anordnung trägt massgebend zur Erfüllung hoher Auflösungsansprüche bei.

Die Scheimpflugbedingung besagt allgemein, dass sich bei einer optischen Abbildung Bild-, Objektiv- und Schärfeebene in einer gemeinsamen Geraden schneiden. Die gewünschte Objektebene kann dann mit maximaler Schärfe abgebildet werden. Die als Schärfeebene bezeichnete scharf abgebildete Objektebene kann somit eine geneigte Ebene sein, wenn entweder die Objektiv- oder die Bildebene einer Kamera geneigt ist.

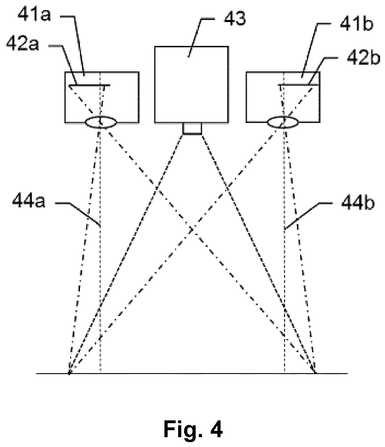

Figur 4 zeigt eine weitere Ausführungsform eines Triangulationsscanners mit einem Projektor 43 und zwei Kameras 41a und 41b.

Die Sensoren 42a und 42b der Kameras sind relativ zu deren jeweiliger optischer Achse 44a und 44b derart versetzt, dass die optische Achse 44a,44b nicht den Sensormittelpunkt schneidet, sondern ein Abstand > 0 zwischen Sensormittelpunkt und optischer Achse besteht. Die optischen Achsen 44a,44b, die durch die jeweiligen optischen Baugruppen (Linsengruppen) definiert sind, sind parallel zueinander ausgerichtet.

Durch ein solches Verschieben der Sensoren 42a,42b werden die jeweiligen Sichtfelder der Kameras entsprechend verschoben. Die Mittelpunkte der erfassbaren Objektbereiche sind also relativ zu den optischen Achsen versetzt. Aufgrund der Parallelität der optischen Achsen 44a,44b kann durch das Verschieben der Sensoren eine trapezoide Verzerrung vermieden werden, wodurch allein eine laterale Verschiebung des erfassbaren Objektbereichs bewirkt wird.

Die optische Achse des Projektors 43 ist insbesondere ebenfalls parallel zu den optischen Achsen 44a,44b ausgerichtet.

Durch die entgegengesetzte Verschiebungsrichtung der Sensoren in dieser Ausführungsform kann so ein weitgehend übereinstimmender Objektbereich auf der Objektebene für beide Kameras bereitgestellt werden, d.h. beide Kameras erfassen im Wesentlichen den gleichen Bereich (Fläche) in der Objektebene. Vorteilhaft ist bei dieser Ausführung, dass ein gleichförmiges Pixelraster sowie ein gleichförmiges Voxelraster für beide Kameras 41a,41b gemeinsam bereitstellbar sind. Die äusseren Koordinatensysteme der Kameras 41a,41b entsprechen sich zudem in deren Ausrichtungen, d.h. diese können gleich orientiert sein. Eine Referenzierung dieser Koordinatensysteme kann somit allein durch eine translatorische Transformation erfolgen.

Es versteht sich, dass der Aspekt eines versetzten Sensors wie in Figur 4 gezeigt sich nicht allein auf diese Ausführungsform beschränkt, sondern mit bereits beschriebenen Ausführungsformen der Erfindung, insbesondere mit des Ausführungsformen der Figuren 1 bis 3, erfindungsgemäss kombinierbar ist. In anderen Worten: ein aus der optischen Achse heraus versetzter Sensor kann auch sowohl mit einem optischen Zoom als auch mit einem digitalen Zoom verwendet werden.

Zudem ist die Erfindung nicht auf die Verschiebung der Sensoren beider Kameras beschränkt, sondern erstreckt sich sowohl auf Ausführungsformen mit nur einem versetzten Sensor als auch auf Ausführungsformen mit mehr als zwei versetzten Sensoren, insbesondere für einen Scanner mit vier Kameras.

Es versteht sich, dass diese dargestellten Figuren nur mögliche Ausführungsbeispiele schematisch darstellen. Die verschiedenen Ansätze können erfindungsgemäss ebenso miteinander sowie mit Methoden der optischen Objektvermessung mittels Triangulation des Stands der Technik kombiniert werden.

## Patentansprüche

1. Triangulationsscanner (10,10') zur Vermessung einer Objektoberfläche (20), mit
• einer Projektionseinheit (13) zur Projektion eines Musters auf die Objektoberfläche (20),
• mindestens einer ersten Bilderfassungseinheit (11a) mit einem ersten Sensor und einer zweiten Bilderfassungseinheit (11b) mit einem zweiten Sensor, wobei die erste und die zweite Bilderfassungseinheit (11a,11b) jeweils eine Linsen-Baugruppe mit einer ersten Brennweite aufweisen und jeweils ausgerichtet und ausgebildet sind zur Erfassung eines das Muster abbildenden Bildes und zur Bereitstellung entsprechender Bildinformation,
• einer Steuerungs- und Verarbeitungseinheit zum Erhalt der Bildinformation und zur Ableitung von Distanzmesswerten aus der Bildinformation,
**dadurch gekennzeichnet, dass**
• der Triangulationsscanner (10,10') eine dritte (12a) Bilderfassungseinheit mit einem dritten Sensor und eine vierte Bilderfassungseinheit (12b) mit einem vierten Sensor aufweist, wobei die dritte und die vierte Bilderfassungseinheit (12a,12b) jeweils eine Linsen-Baugruppe mit einer zweiten Brennweite aufweisen und jeweils ausgerichtet und ausgebildet sind zur Erfassung eines das Muster abbildenden Bildes und zur Bereitstellung entsprechender Bildinformation,
• die erste Brennweite kleiner als die zweite Brennweite ist,
• die erste und zweite Bilderfassungseinheit (11a,11b) ein erstes Stereopaar und die dritte und vierte Bilderfassungseinheit (12a,12b) ein zweites Stereopaar bilden,
• der Triangulationsscanner (10,10') eine Erfassungszoomfunktionalität zum derartigen Ansteuern und/oder Auslesen der Sensoren aufweist, dass für jeden Sensor ein jeweils erster Erfassungszustand und ein jeweils zweiter Erfassungszustand bereitstellbar ist, wobei im ersten Erfassungszustand ein grösserer Bilderfassungsbereich des jeweiligen Sensors definiert ist als im zweiten Erfassungszustand,
• der erste und der zweite Erfassungszustand des ersten Sensors mit dem ersten und dem zweiten Erfassungszustand des zweiten Sensors korrespondiert, wodurch durch das erste Stereopaar eine erste und eine zweite Erfassungszoomstufe bereitstellbar ist, und
• der erste und der zweite Erfassungszustand des dritten Sensors mit dem ersten und dem zweiten Erfassungszustand des vierten Sensors korrespondiert, wodurch durch das zweite Stereopaar eine dritte und eine vierte Erfassungszoomstufe bereitstellbar ist,
wobei jede Erfassungszoomstufe die Erfassung eines Bildes entsprechend einem durch die jeweilige Erfassungszoomstufe definierten Sichtfeld bereitstellt und die Sichtfelder jeweils unterschiedlich sind.

2. Triangulationsscanner (10,10') nach Anspruch 1, **gekennzeichnet durch**
eine derart konfigurierte Erfassungsumschaltfunktionalität, dass bei deren Ausführung durch Selektion eine der Erfassungszoomstufen bereitgestellt wird.

3. Triangulationsscanner (10,10') nach Anspruch 2, **dadurch gekennzeichnet, dass**
• bei Selektion der ersten Erfassungszoomstufe die Bilderfassung mittels des ersten Stereopaars im ersten Erfassungszustand bereitgestellt wird,
• bei Selektion der zweiten Erfassungszoomstufe die Bilderfassung mittels des ersten Stereopaars im zweiten Erfassungszustand bereitgestellt wird,
• bei Selektion der dritten Erfassungszoomstufe die Bilderfassung mittels des zweiten Stereopaars im ersten Erfassungszustand bereitgestellt wird und
• bei Selektion der vierten Erfassungszoomstufe die Bilderfassung mittels des zweiten Stereopaars im zweiten Erfassungszustand bereitgestellt wird.

4. Triangulationsscanner (10,10') nach einem der vorangehenden Ansprüche,
**dadurch gekennzeichnet, dass**
• das der zweiten Erfassungszoomstufe zugeordnete Sichtfeld kleiner als das der ersten Erfassungszoomstufe zugeordnete Sichtfeld ist,
• das der dritten Erfassungszoomstufe zugeordnete Sichtfeld kleiner als das der zweiten Erfassungszoomstufe zugeordnete Sichtfeld ist und
• das der vierten Erfassungszoomstufe zugeordnete Sichtfeld kleiner als das der dritten Erfassungszoomstufe zugeordnete Sichtfeld ist.

5. Triangulationsscanner (10,10') nach einem der Ansprüche 2 bis 4,
**dadurch gekennzeichnet, dass**
die Erfassungszoomfunktionalität derart eingerichtet ist, dass für den ersten, den zweiten, den dritten und den vierten Sensor
• jeweils der gleiche erste Erfassungszustand und
• jeweils der gleiche zweite Erfassungszustand bereitstellbar ist.

6. Triangulationsscanner (10,10') nach einem der vorangehenden Ansprüche,
**dadurch gekennzeichnet, dass**
• die optische Achse der ersten Bilderfassungseinheit parallel oder koaxial zur optischen Achse der dritten Bilderfassungseinheit ausgerichtet ist, und/oder
• die optische Achse der zweiten Bilderfassungseinheit parallel oder koaxial zur optischen Achse der vierten Bilderfassungseinheit ausgerichtet ist,
insbesondere wobei der Triangulationsscanner (10,10') einen Strahlteiler (15a,15b) aufweist und die erste und die dritte bzw. die zweite und die vierte Bilderfassungseinheit derart relativ zu dem Strahlteiler ausgerichtet sind, dass die jeweiligen entsprechenden optischen Achsen parallel oder koaxial ausgerichtet sind.

7. Triangulationsscanner (10,10') nach einem der vorangehenden Ansprüche,
**dadurch gekennzeichnet, dass**
• die Projektionseinheit (13) eine entlang deren optischer Achse variabel positionierbare Zoom-Baugruppe (32) zur Bereitstellung zumindest zweier optischer Projektionsbrennweiten aufweist,
• die Projektionseinheit (13) ein eine Projektionsfläche definierendes Projektionselement (31) zur variablen und gesteuerten Lichtemission aufweist und
• der Triangulationsscanner (10,10') eine Projektionszoomfunktionalität zum derartigen Ansteuern des Projektionselements (31) aufweist, dass ein erster und ein zweiter Projektionszustand bereitstellbar ist, wobei im ersten Projektionszustand ein grösseres Projektionssichtfeld als im zweiten Projektionszustand bereitgestellt wird,
insbesondere wobei zur Bereitstellung des zweiten Projektionszustands gesteuert durch die Projektionszoomfunktionalität ein kleinerer Lichtemissionsbereich der Projektionsfläche, insbesondere ein innerer Teilbereich, für die Mustererzeugung aktiviert ist als zur Bereitstellung des ersten Projektionszustands.

8. Triangulationsscanner (10,10') nach Anspruch 7,
**dadurch gekennzeichnet, dass**
für jede optische Projektionsbrennweite der erste und der zweite Projektionszustand bereitstellbar ist.

9. Triangulationsscanner (10,10') nach Anspruch 7 oder 8, **dadurch gekennzeichnet, dass**
• eine erste der Projektionsbrennweiten kleiner als eine zweite der Projektionsbrennweiten ist,
• durch Einstellen der ersten Projektionsbrennweite und des ersten Projektionszustands eine erste Projektionszoomstufe bereitstellbar ist,
• durch Einstellen der ersten Projektionsbrennweite und des zweiten Projektionszustands eine zweite Projektionszoomstufe bereitstellbar ist,
• durch Einstellen der zweiten Projektionsbrennweite und des ersten Projektionszustands eine dritte Projektionszoomstufe bereitstellbar ist und
• durch Einstellen der zweiten Projektionsbrennweite und des zweiten Projektionszustands eine vierte Projektionszoomstufe bereitstellbar ist.

10. Triangulationsscanner (10,10') nach Anspruch 9,
**gekennzeichnet durch**
eine derart konfigurierte Projektorumschaltfunktionalität, dass bei deren Ausführung durch Selektion eine der Projektionszoomstufen eingestellt wird.

11. Triangulationsscanner (10,10') nach Anspruch 10,
**gekennzeichnet durch**
eine derart konfigurierte Messsteuerungsfunktionalität, dass bei deren Ausführung eine Selektion der Projektorumschaltfunktionalität und eine Selektion der Erfassungsumschaltfunktionalität derart abgestimmt erfolgen, dass
• die erste Erfassungszoomstufe und die erste Projektionszoomstufe als erste Messeinstellung,
• die zweite Erfassungszoomstufe und die zweite Projektionszoomstufe als zweite Messeinstellung,
• die dritte Erfassungszoomstufe und die dritte Projektionszoomstufe als dritte Messeinstellung und
• die vierte Erfassungszoomstufe und die vierte Projektionszoomstufe als vierte Messeinstellung bereitstellbar ist, wobei das Bereitstellen der jeweiligen Erfassungszoomstufe und der jeweiligen Projektionszoomstufe einer Messeinstellung zeitlich abgestimmt, insbesondere zeitlich überlappend, insbesondere simultan, erfolgt.

12. Triangulationsscanner (10,10') nach einem der vorangehenden Ansprüche,
**dadurch gekennzeichnet, dass**
• die erste und/oder die zweite Bilderfassungseinheit (11a,11b,12a,12b,41a,41b) derart ausgebildet ist, dass ihr Sensor (42a,42b) und ihre Linsen-Baugruppe so positioniert sind, dass ein Sensormittelpunkt des Sensors relativ zur optischen Achse (44a,44b) der Linsen-Baugruppe versetzt ist, sodass ein Abstand a > 0 von dem Sensormittelpunkt zu der optischen Achse (44a,44b) vorliegt, und/oder
• die optischen Achsen (44a,44b) der ersten und der zweiten Linsen-Baugruppe bzw. der ersten und der zweiten Bilderfassungseinheit (41a,41b) parallel sind, und/oder
• eine exzentrische Verschiebung des Sichtfeldes relativ zur optischen Achse (44a,44b) resultiert und der Versatz derart ausgeprägt ist, dass durch die Sichtfelder der ersten und der zweiten Bilderfassungseinheit (11a,11b,12a,12b,41a,41b) definierte Objektbereiche in einer Objektebene im Wesentlichen übereinstimmen, insbesondere vollständig überlappen, und/oder
• ein gleichförmiges Pixelraster in der Objektebene für die erste und die zweite Bilderfassungseinheit (41a,41b) bereitgestellt ist, insbesondere wobei eine Orientierung der der ersten Bilderfassungseinheit zugeordneten Pixel in der Objektebene und eine Orientierung der der zweiten Bilderfassungseinheit zugeordneten Pixel in der Objektebene gleich sind.

13. Triangulationsscanner (10,10') nach einem der vorangehenden Ansprüche,
**dadurch gekennzeichnet, dass**
die erste Bilderfassungseinheit und die zweite Bilderfassungseinheit in einem gemeinsamen äusseren Koordinatensystem referenziert sind und ein gleichförmiges gemeinsames Voxelraster für die erste und die zweite Bilderfassungseinheit (41a,41b) bereitgestellt ist.

## Claims

1. Triangulation scanner (10,10') for measuring an object surface (20), having
• a projection unit (13) for projecting a pattern on the object surface (20),
• at least one first image acquisition unit (11a) having a first sensor and one second image acquisition unit (11b) having a second sensor, wherein the first and the second image acquisition unit (11a,11b) each have a lens assembly having a first focal length and are each aligned and designed to acquire an image depicting the pattern and to provide corresponding image information,
• a control and processing unit for receiving the image information and for deriving distance measured values from the image information,
**characterized in that**
• the triangulation scanner (10,10') has a third (12a) image acquisition unit having a third sensor and a fourth image acquisition unit (12b) having a fourth sensor, wherein the third and the fourth image acquisition unit (12a,12b) each have a lens assembly having a second focal length and are each aligned and designed to acquire an image depicting the pattern and to provide corresponding image information,
• the first focal length is less than the second focal length,
• the first and second image acquisition unit (11a,11b) form a first stereo pair and the third and fourth image acquisition unit (12a,12b) form a second stereo pair,
• the triangulation scanner (10,10') has an acquisition zoom functionality for activating and/or reading out the sensors in such a way that for each sensor a respective first acquisition state and a respective second acquisition state can be provided, wherein a greater image acquisition region of the respective sensor is defined in the first acquisition state than in the second acquisition state,
• the first and the second acquisition state of the first sensor correspond to the first and the second acquisition state of the second sensor, whereby a first and a second acquisition zoom level can be provided by the first stereo pair, and
• the first and the second acquisition state of the third sensor correspond to the first and the second acquisition state of the fourth sensor, whereby a third and a fourth acquisition zoom level can be provided by the second stereo pair,
wherein each acquisition zoom level provides the acquisition of an image corresponding to a field of view defined by the respective acquisition zoom level and the fields of view are each different.

2. Triangulation scanner (10,10') according to Claim 1, **characterized by**
an acquisition switching functionality configured in such a way that upon its execution by selection one of the acquisition zoom levels is provided.

3. Triangulation scanner (10,10') according to Claim 2, **characterized in that**
• upon selection of the first acquisition zoom level, the image acquisition is provided by means of the first stereo pair in the first acquisition state,
• upon selection of the second acquisition zoom level, the image acquisition is provided by means of the first stereo pair in the second acquisition state,
• upon selection of the third acquisition zoom level, the image acquisition is provided by means of the second stereo pair in the first acquisition state, and
• upon selection of the fourth acquisition zoom level, the image acquisition is provided by means of the second stereo pair in the second acquisition state.

4. Triangulation scanner (10,10') according to any one of the preceding claims,
**characterized in that**
• the field of view associated with the second acquisition zoom level is smaller than the field of view associated with the first acquisition zoom level,
• the field of view associated with the third acquisition zoom level is smaller than the field of view associated with the second acquisition zoom level, and
• the field of view associated with the fourth acquisition zoom level is smaller than the field of view associated with the third acquisition zoom level.

5. Triangulation scanner (10,10') according to any one of Claims 2 to 4,
**characterized in that**
the acquisition zoom functionality is configured in such a way that, for the first, the second, the third, and the fourth sensor
• in each case the same first acquisition state and
• in each case the same second acquisition state can be provided.

6. Triangulation scanner (10,10') according to any one of the preceding claims,
**characterized in that**
• the optical axis of the first image acquisition unit is aligned in parallel or coaxially to the optical axis of the third image acquisition unit, and/or
• the optical axis of the second image acquisition unit is aligned in parallel or coaxially to the optical axis of the fourth image acquisition unit,
in particular wherein the triangulation scanner (10,10') has a beam splitter (15a,15b) and the first and the third and/or the second and the fourth image acquisition unit are aligned in relation to the beam splitter in such a way that the respective corresponding optical axes are aligned in parallel or coaxially.

7. Triangulation scanner (10,10') according to any one of the preceding claims,
**characterized in that**
• the projection unit (13) has a zoom assembly (32) that can be positioned variably along its optical axis to provide at least two optical projection focal lengths,
• the projection unit (13) has a projection element (31) defining a projection surface for variable and controlled light emission, and
• the triangulation scanner (10,10') has a projection zoom functionality for activating the projection element (31) in such a way that a first and a second projection state can be provided, wherein a larger projection field of view is provided in the first projection state than in the second projection state,
in particular wherein to provide the second projection state, controlled by the projection zoom functionality, a smaller light emission region of the projection surface, in particular an inner subregion, is activated for the pattern generation than to provide the first projection state.

8. Triangulation scanner (10,10') according to Claim 7, **characterized in that**
for each optical projection focal length, the first and the second projection state can be provided.

9. Triangulation scanner (10,10') according to Claim 7 or 8,
**characterized in that**
• a first of the projection focal lengths is less than a second of the projection focal lengths,
• a first projection zoom level can be provided by setting the first projection focal length and the first projection state,
• a second projection zoom level can be provided by setting the first projection focal length and the second projection state,
• a third projection zoom level can be provided by setting the second projection focal length and the first projection state, and
• a fourth projection zoom level can be provided by setting the second projection focal length and the second projection state.

10. Triangulation scanner (10,10') according to Claim 9, **characterized by**
a projector switching functionality configured in such a way that upon its execution by selection, one of the projection zoom levels is set.

11. Triangulation scanner (10,10') according to Claim 10, **characterized by**
a measurement control functionality configured in such a way that upon its execution, a selection of the projector switching functionality and a selection of the acquisition switching functionality take place adapted in such a way that
• the first acquisition zoom level and the first projection zoom level as the first measurement setting,
• the second acquisition zoom level and the second projection zoom level as the second measurement setting,
• the third acquisition zoom level and the third projection zoom level as the third measurement setting, and
• the fourth acquisition zoom level and the fourth projection zoom level as the fourth measurement setting
can be provided, wherein the provision of the respective acquisition zoom level and the respective projection zoom level of a measurement setting takes place in a chronologically adapted, in particular chronologically overlapping, in particular simultaneous manner.

12. Triangulation scanner (10,10') according to any one of the preceding claims,
**characterized in that**
• the first and/or the second image acquisition unit (11a,11b,12a,12b,41a,41b) is designed in such a way that its sensor (42a,42b) and its lens assembly are positioned so that a sensor center point of the sensor is offset in relation to the optical axis (44a,44b), so that a distance a > 0 is present from the sensor center point to the optical axis (44a,44b), and/or
• the optical axes (44a,44b) of the first and the second lens assembly or the first and the second image acquisition unit (41a,41b) are parallel, and/or
• an eccentric displacement of the field of view in relation to the optical axis (44a,44b) results and the offset is applied in such a way that object regions defined by the fields of view of the first and the second image acquisition unit (11a,11b,12a,12b,41a,41b) in an object plane essentially correspond, in particular completely overlap, and/or
• a uniform pixel grid is provided in the object plane for the first and the second image acquisition unit (41a,41b), in particular wherein an orientation of the pixels associated with the first image acquisition unit in the object plane and an orientation of the pixels associated with the second image acquisition unit in the object plane are identical.

13. Triangulation scanner (10,10') according to any one of the preceding claims,
**characterized in that**
the first image acquisition unit and the second image acquisition unit are referenced in a common external coordinate system and a uniform common voxel grid is provided for the first and the second image acquisition unit (41a,41b).

## Revendications

1. Scanner à triangulation (10, 10') pour mesurer une surface d'objet (20), comprenant :
• une unité de projection (13) pour projeter un motif sur la surface d'objet (20),
• au moins une première unité d'acquisition d'image (11a) avec un premier capteur et une deuxième unité d'acquisition d'image (11b) avec un deuxième capteur, la première et la deuxième unité d'acquisition d'image (11a, 11b) présentant chacune un ensemble de lentilles ayant une première distance focale et étant chacune orientée et conçue pour acquérir une image représentant le motif et pour fournir une information d'image correspondante,
• une unité de commande et de traitement pour obtenir l'information d'image et pour déduire des valeurs de mesure de distance à partir de l'information d'image,
**caractérisé en ce que**
• le scanner à triangulation (10, 10') comprend une troisième (12a) unité d'acquisition d'image avec un troisième capteur et une quatrième unité d'acquisition d'image (12b) avec un quatrième capteur, la troisième et la quatrième unité d'acquisition d'image (12a, 12b) présentant chacune un ensemble de lentilles ayant une deuxième distance focale et étant chacune orientée et conçue pour acquérir une image représentant le motif et pour fournir une information d'image correspondante,
• la première distance focale est inférieure à la deuxième distance focale,
• les première et deuxième unités d'acquisition d'image (11a, 11b) forment une première paire stéréo et les troisième et quatrième unités d'acquisition d'image (12a, 12b) forment une deuxième paire stéréo,
• le scanner à triangulation (10, 10') présente une fonctionnalité de zoom d'acquisition pour commander et/ou lire les capteurs de telle sorte qu'un premier état d'acquisition respectif et un deuxième état d'acquisition respectif peuvent être mis à disposition pour chaque capteur, une zone d'acquisition d'image plus grande du capteur respectif étant définie dans le premier état d'acquisition que dans le deuxième état d'acquisition,
• le premier et le deuxième état d'acquisition du premier capteur correspondent au premier et au deuxième état d'acquisition du deuxième capteur, ce qui permet de mettre à disposition un premier et un deuxième niveau de zoom d'acquisition par la première paire stéréo, et
• le premier et le deuxième état d'acquisition du troisième capteur correspondent au premier et au deuxième état d'acquisition du quatrième capteur, ce qui permet de mettre à disposition un troisième et un quatrième niveau de zoom d'acquisition par la deuxième paire stéréo,
chaque niveau de zoom d'acquisition permettant l'acquisition d'une image correspondant à un champ de vision défini par le niveau de zoom d'acquisition respectif, les champs de vision étant chaque fois différents.

2. Scanner à triangulation (10, 10') selon la revendication 1,
**caractérisé par**
une fonctionnalité de commutation d'acquisition configurée de telle sorte que, lorsqu'elle est exécutée par sélection, un des niveaux de zoom d'acquisition est mis à disposition.

3. Scanner à triangulation (10, 10') selon la revendication 2,
**caractérisé en ce que**
• lors de la sélection du premier niveau de zoom d'acquisition, l'acquisition d'image est mise à disposition au moyen de la première paire stéréo dans le premier état d'acquisition,
• lors de la sélection du deuxième niveau de zoom d'acquisition, l'acquisition d'image est mise à disposition au moyen de la première paire stéréo dans le deuxième état d'acquisition,
• lors de la sélection du troisième niveau de zoom d'acquisition, l'acquisition d'image est mise à disposition au moyen de la deuxième paire stéréo dans le premier état d'acquisition et
• lors de la sélection du quatrième niveau de zoom d'acquisition, l'acquisition d'image est mise à disposition au moyen de la deuxième paire stéréo dans le deuxième état d'acquisition.

4. Scanner à triangulation (10, 10') selon l'une des revendications précédentes,
**caractérisé en ce que**
• le champ de vision associé au deuxième niveau de zoom d'acquisition est plus petit que le champ de vision associé au premier niveau de zoom d'acquisition,
• le champ de vision associé au troisième niveau de zoom d'acquisition est plus petit que le champ de vision associé au deuxième niveau de zoom d'acquisition, et
• le champ de vision attribué au quatrième niveau de zoom d'acquisition est plus petit que le champ de vision attribué au troisième niveau de zoom d'acquisition.

5. Scanner à triangulation (10, 10') selon l'une des revendications 2 à 4, **caractérisé en ce que**
la fonctionnalité de zoom d'acquisition est conçue de telle sorte que, pour le premier, le deuxième, le troisième et le quatrième capteur,
• respectivement le même premier état d'acquisition et
• respectivement le même deuxième état d'acquisition peut être mis à disposition.

6. Scanner à triangulation (10, 10') selon l'une des revendications précédentes,
**caractérisé en ce que**
• l'axe optique de la première unité d'acquisition d'image est orienté parallèlement ou coaxialement à l'axe optique de la troisième unité d'acquisition d'image, et/ou
• l'axe optique de la deuxième unité d'acquisition d'image est orienté parallèlement ou coaxialement à l'axe optique de la quatrième unité d'acquisition d'image,
en particulier, le scanner à triangulation (10, 10') comprenant un séparateur de faisceau (15a, 15b) et les première et troisième ou les deuxième et quatrième unités d'acquisition d'image étant orientées par rapport au séparateur de faisceau de telle sorte que les axes optiques correspondants respectifs sont orientés parallèlement ou coaxialement.

7. Scanner à triangulation (10, 10') selon l'une des revendications précédentes,
**caractérisé en ce que**
• l'unité de projection (13) présente un ensemble de zoom (32) positionnable de manière variable le long de son axe optique pour mettre à disposition au moins deux distances focales de projection optiques,
• l'unité de projection (13) présente un élément de projection (31) définissant une surface de projection pour l'émission de lumière variable et commandée et
• le scanner à triangulation (10, 10') présente une fonctionnalité de zoom de projection pour commander l'élément de projection (31) de telle sorte qu'un premier et un deuxième état de projection peuvent être mis à disposition, un champ de vision de projection plus grand étant mis à disposition dans le premier état de projection que dans le deuxième état de projection,
en particulier, pour la mise à disposition du deuxième état de projection, sous la commande de la fonctionnalité de zoom de projection, une zone d'émission de lumière plus petite de la surface de projection, en particulier une zone partielle intérieure, étant activée pour la génération de motifs que pour la mise à disposition du premier état de projection.

8. Scanner à triangulation (10, 10') selon la revendication 7,
**caractérisé en ce que**
le premier et le deuxième état de projection peuvent être mis à disposition pour chaque distance focale de projection optique.

9. Scanner à triangulation (10, 10') selon la revendication 7 ou 8,
**caractérisé en ce que**
• une première des distances focales de projection est inférieure à une deuxième des distances focales de projection,
• un premier niveau de zoom de projection peut être mis à disposition en réglant la première distance focale de projection et le premier état de projection,
• un deuxième niveau de zoom de projection peut être mis à disposition en réglant la première distance focale de projection et le deuxième état de projection,
• un troisième niveau de zoom de projection peut être mis à disposition en réglant la deuxième distance focale de projection et le premier état de projection et
• un quatrième niveau de zoom de projection peut être mis à disposition en réglant la deuxième distance focale de projection et le deuxième état de projection.

10. Scanner à triangulation (10, 10') selon la revendication 9,
**caractérisé par**
une fonctionnalité de commutation de projecteur configurée de telle sorte que, lorsqu'elle est exécutée par sélection, un des niveaux de zoom de projection est réglé.

11. Scanner à triangulation (10, 10') selon la revendication 10,
**caractérisé par**
une fonctionnalité de commande de mesure configurée de telle sorte que, lorsqu'elle est exécutée, une sélection de la fonctionnalité de commutation de projecteur et une sélection de la fonctionnalité de commutation d'acquisition sont effectuées de manière coordonnée de telle sorte que
• le premier niveau de zoom d'acquisition et le premier niveau de zoom de projection comme premier réglage de mesure,
• le deuxième niveau de zoom d'acquisition et le deuxième niveau de zoom de projection comme deuxième réglage de mesure,
• le troisième niveau de zoom d'acquisition et le troisième niveau de zoom de projection comme troisième réglage de mesure et
• le quatrième niveau de zoom d'acquisition et le quatrième niveau de zoom de projection comme quatrième réglage de mesure
peuvent être mis à disposition, la mise à disposition du niveau de zoom d'acquisition respectif et du niveau de zoom de projection respectif d'un réglage de mesure s'effectuant de manière coordonnée dans le temps, en particulier en se chevauchant dans le temps, en particulier simultanément.

12. Scanner à triangulation (10, 10') selon l'une des revendications précédentes,
**caractérisé en ce que**
• la première et/ou la deuxième unité d'acquisition d'image (11a, 11b, 12a, 12b, 41a, 41b) est conçue de telle sorte que son capteur (42a, 42b) et son ensemble de lentilles sont positionnés de manière à ce qu'un centre de capteur du capteur soit décalé par rapport à l'axe optique (44a, 44b) de l'ensemble de lentilles, de sorte qu'il existe une distance a > 0 entre le centre de capteur et l'axe optique (44a, 44b), et/ou
• les axes optiques (44a, 44b) du premier et du deuxième ensemble de lentilles ou de la première et la deuxième unité d'acquisition d'image (41a, 41b) sont parallèles, et/ou
• il en résulte un décalage excentrique du champ de vision par rapport à l'axe optique (44a, 44b) et le décalage est tel que des zones d'objet définies par les champs de vision de la première et de la deuxième unité d'acquisition d'image (11a, 11b, 12a, 12b, 41a, 41b) coïncident essentiellement dans un plan objet, en particulier se chevauchent complètement, et/ou
• une grille de pixels uniforme dans le plan objet est mise à disposition pour la première et la deuxième unité d'acquisition d'image (41a, 41b), en particulier une orientation des pixels associés à la première unité d'acquisition d'image dans le plan objet et une orientation des pixels associés à la deuxième unité d'acquisition d'image dans le plan objet étant identiques.

13. Scanner à triangulation (10, 10') selon l'une des revendications précédentes,
**caractérisé en ce que**
la première unité d'acquisition d'image et la deuxième unité d'acquisition d'image sont référencées dans un système de coordonnées extérieur commun et une grille de voxels commune uniforme est mise à disposition pour la première et la deuxième unité d'acquisition d'image (41a, 41b).
